# EUROPEAN PATENT SPECIFICATION

(11) **EP 0 788 286 B1**
(45) Date of publication and mention of the grant of the patent: **14.07.2004**
(21) Application number: 96309017.0
(22) Date of filing: 11.12.1996
(51) Int. Cl.: H04Q 7/32

(54) **A radio handset and method of operation**
Funkhandgerät und Betriebsverfahren dazu
Combiné radio-téléphone et procédé de fonctionnement

(30) Priority: 31.01.1996 GB 9601941
(43) Date of publication of application: 06.08.1997
(73) Proprietor: Nokia Corporation, 02150 Espoo (FI)
(72) Inventor: Tat, Nguyen Quan, Yateley, Hampshire, GU46 7SH (GB)
(74) Representative: Haws, Helen Louise

(56) References cited:
- GB-A- 2 254 225
- US-A- 4 622 695

## Description

This invention relates to radio telephones or handsets and in particular to such handsets for communication with base stations in a radio telephone system employing transmission on a plurality of channels. Particularly, but not exclusively, the invention relates to such handsets for communication with base stations in a digital cellular radio telephone system employing transmission by a plurality of carrier frequencies in frames, such as TDMA frames, each consisting of a predetermined number of time slots.

When a handset communicates with a base station on certain systems it is not untypical for a number of different channels to be used in the course of a single communication link. A different channel may be selected because signal quality has deteriorated on the channel currently in use for communication. When such a change in channel is required, the information being communicated between the handset and the system transfers or 'hands over' to another channel ie 'handover' occurs. Handover can be 'intracell' to another channel with the same base station or 'intercell' to another channel on a different base station.

In order that the system can keep track of a handset as it moves from one channel to another it is desirable for each handset using a system to be uniquely identifiable. If two handsets simultaneously using the same system are indistinguishable, when one of them wishes to handover to another channel, the system will not be able to tell with certainty which of the handsets it is that is changing channel. There is accordingly the possibilty that the system will not be able to associate the new channel with the correct handset with the result that communication information (including speech) may be routed to the wrong handset. If this occurs, the communication link between the other handset and the system will be lost. This loss of traffic channel will be apparent to the user of the other handset as a dropped call which is highly undesirable.

Each handset manufactured will typically have a unique handset identity. Because of the number of handsets potentially in existence this unique handset identity is typically rather cumbersome to signal each time the identity of a handset is required. To simplify the procedure, particularly under protocols that favour a large number of smaller supporting systems such as DECT, a shortened simplified identity is used by the handset to allow it to identify itself to the system to maintain continuity during a call or other communication link. Under the DECT protocol these simplified identities may be provided by the system. They are, however, only stored temporarily by a handset as they are typically lost when the handset powers down. In some other DECT systems, no identity is provided by the system and the handset must generate one itself.

With simplified identities being used under the DECT protocol, a problem, arises: How does the handset identify itself to the system when it has no allocated simplified identity either because it is the first time the handset has used the system for a while or because the system does not allocate simplified identities? The DECT protocol addresses this problem by providing for the handset to generate its own simplified 'default' identity if it does not have a workable allocated simplified identity.

The constitution of a default identity still, however, provides problems. How is the default identity to be constituted? A number of different manufacturers will provide handsets compatible with the same support system. Even if a random number generator is used to provide the default identity, there will be a chance that two handsets communicating with the system at the same time will have the same identity. The risk of two handset having the same identity simultaneously using a system increases the shorter the default identity and the greater the number of handsets with a default identity simultaneously using a particular system. This could be a particular problem in systems that do not allocate simplified identities.

US 4,622,695 describes a system in which the ID code transferred between a base station and a handset is used to prevent two pairs of units switching to the same new channel.

In accordance with a first aspect of the present invention there is provided a radio handset for communication with a radio telephone system employing transmission on a plurality of communication channels in which a radio handset is identified to the system by way of a user identification signal, the radio handset comprising a processor operable to generate a user identification signal for communication to the system from information uniquely identifying a channel for communication with the system.

In accordance with a second aspect of the invention there is provided a radio telephone system comprising a plurality of radio handsets for communication with base stations of the system on respective communication channels, each radio handset being identifiable to the system by way of a user identification signal, each radio handset comprising a processor operable to generate a user identification signal for communication to the system from information uniquely identifying a traffic channel for communication between the handset and the system.

In accordance with a third aspect of the invention there is provided a method for providing a user identification signal for identifying a radio handset for communication with a radio telephone system employing transmission on a plurality of communication channels to the system, comprising generating a user identification signal for communication to the system from information uniquely identifying a channel for communicating with the system.

By generating a user identification signal from information uniquely identifying a traffic channel for communicating with the system no two (or more) handsets having the same user identification signal can be in simultaneous communication with the system. If both handsets attempt to communicate on the same channel at the same time - the only time they will both simultaneously generate an identical user identification they will interfere and neither handset will be able to set up on the selected communication channel. Another channel will have to be selected by each handset and a fresh attempt at setting up a communication link with the system with a new user identification generated from information uniquely identifying the new channel will be made.

As a system will typically prevent a second handset with a user identification signal already in use from accessing the system, a second handset accessing the system while the first is still using the user identification signal should not be allowed access to the system. It should not, therefore, be possible for two handsets to concurrently use a system with the same user identification signal as one or both of them would be prevented from communicating with the system. Accordingly, the invention provides the advantage of allowing the problem of losing a communication channel when handover is requested to be avoided by stopping two handsets with the same generated user identification from using the system at the same time.

The communication channel may be a traffic channel selected for opening a communication link with the system. In a preferred option the handset generates a user identification signal for each communication link with the system.

The radio handset may generate a user identification signal unless the system has previously allocated a user identification signal.

The system preferably ignores a handset requesting a traffic channel having the same user identification signal as a handset currently utilising the system.

If all handsets compatible with a particular system are in accordance with the present invention no two handsets simultaneously selecting a traffic channel for communication with the system will generate the same user identification signal. As two handsets simultaneously selecting the same channel would interfere neither handset would be able to use the channel selected. Each would have to select a new channel and consequently provide a new default identity to the system. Provided the system does not allow a second handset using the same user identification signal as a handset already in communication with the system to communicate with the system the problem of one or other of the communication channels subsequently being dropped is therefore avoided.

Any formula can be used to generate the user identification signal, from the information uniquely identifying the channel as long as there is a one-to-one correspondence between the user identification signals generated and the traffic channel.

The invention will be described in more detail with reference to the accompanying drawings of which:

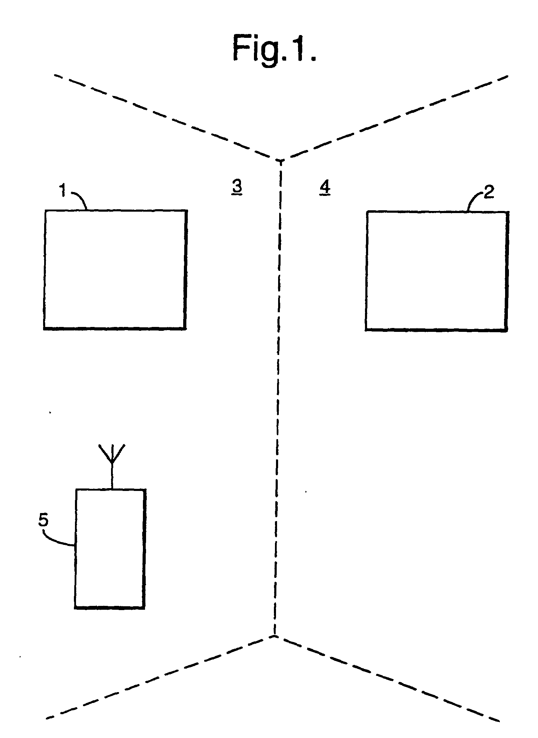

Figure 1 is a schematic representation a radio telephone system suitable for utilising the present invention;
Figure 2 is a schematic representation of a handset in accordance with the present invention;
Figure 3 is a schematic representation of a signal burst;
Figure 4 is a schematic representation of a Default PMID in accordance with the present invention; and

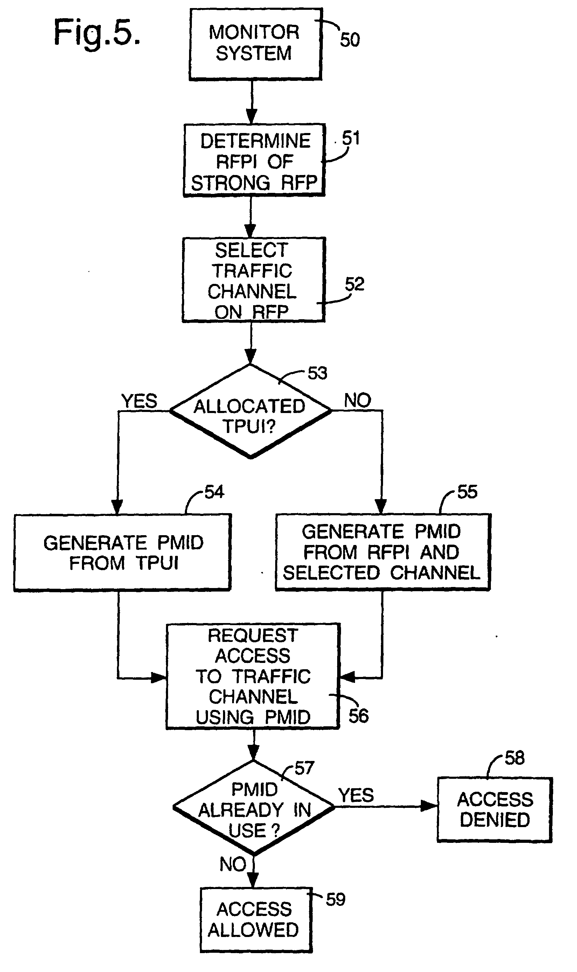

Figure 5 is a flow chart illustrating an embodiment of the invention utilised in generating a PMID.

In the described example shown in the drawings, the radio telephone system conforms to the DECT (Digital European Cordless Telecommunications) standard and uses ten carrier frequencies, separated by 1.728 MHz, within a frequency band from 1880 MHz to 1900 MHz. This system divides time into TDMA frames, with each frame having a time duration of 10ms. Each frame is divided into 24 time slots, numbered from 0 to 23. Each frame is divided into two halves, the first half (slots 0 to 11) being reserved for the transmission of the base station and the second half (slots 12 to 23) being reserved for the transmission of the handset. A handset communicates on a channel which in this particular case is a combination of time slot and carrier frequency.

A DECT system typically includes one fixed part and several radio fixed parts (RFPIs) or base stations 1, 2 supporting respective cells 3, 4. Many portable parts or handsets 5 can use each cell. Each fixed part is physically connected to a standard wireline telephone system, each radio fixed part 1, 2 of a common system is physically connected to the fixed part.

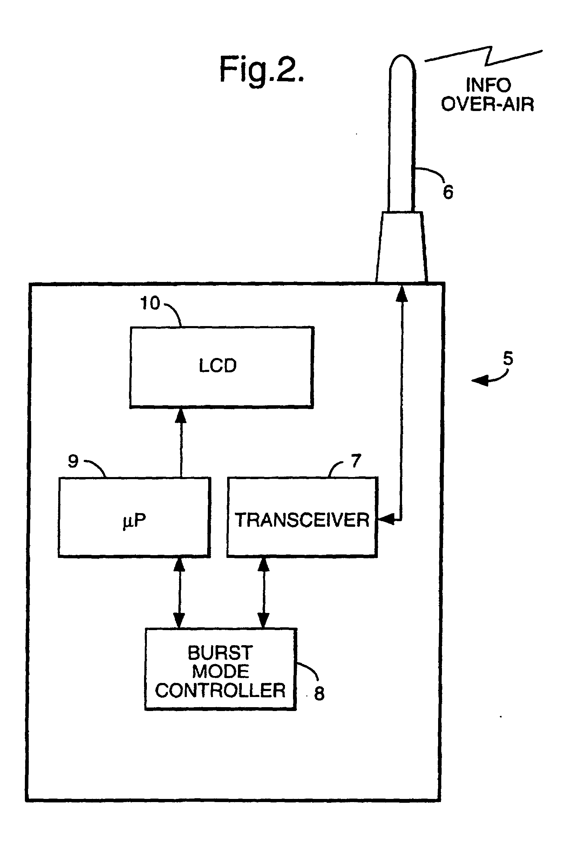

Each handset 5 has an antenna 6, a transceiver 7, a burst mode controller 8 and processing means 9 programmed with algorithms controlling communication with a base station over a communication channel. Information is displayed on a Liquid Crystal Display (LCD) 10. (Figure 2)

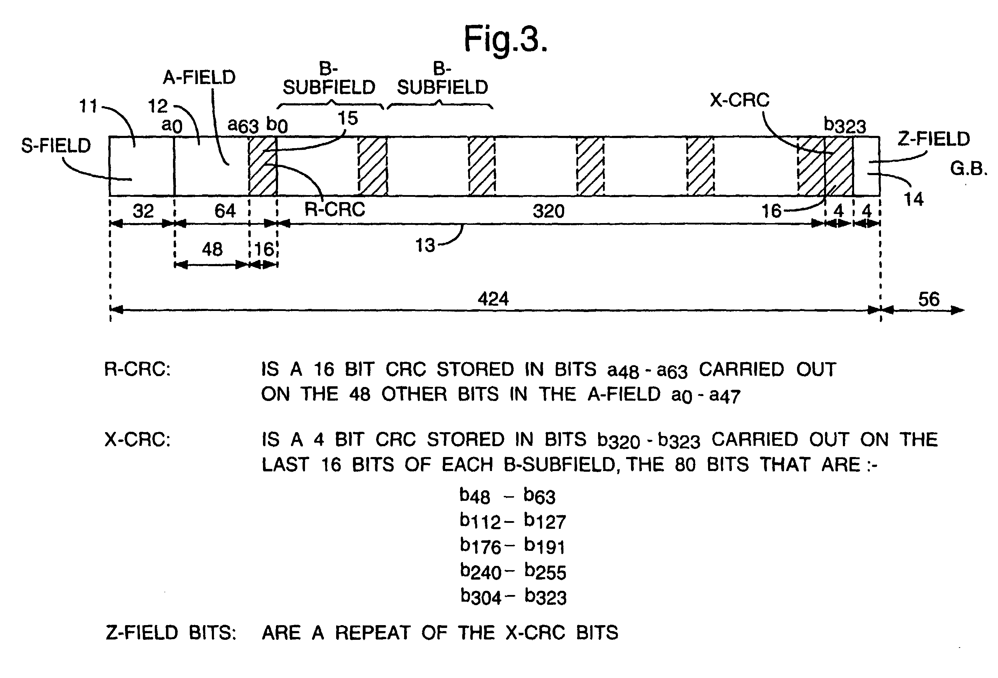

Transmission in one of the time slots of a frame is accomplished by sending a signal burst. Each signal burst is divided into four fields and its structure is illustrated in Figure 3. The S-field 11 used for synchronisation, and the A-field 12, used to send signalling information in accordance with the DECT protocol are both used when locking on i.e. finding a channel for receiving system information. The B-field 13 is used for sending speech or data to a system user and the Z-field 14 is provided specifically for sliding error detection. In addition to the Z-field, the A and B fields have their own error detection sub-fields known as Cyclic Redundancy Checks (CRCs) R-CRC 15 and X-CRC 16 respectively. The A-field is 64 bits long with the final 16 bits, the R-CRC 15, providing an error check on the preceding 48 bits. The B-field is 320 bits. The 4 bit X-CRC 16 provides an error check on the B-field. The Z-field 14 is a repetition of the X-CRC 16.

A handset can be in two states with respect to a system, 'idle lock' ie monitoring the system with no call in progress, or 'active lock'. The handset is in active lock if a traffic channel has been assigned for a call to be made or received or for the transfer of information to the system. When in active lock a change in traffic channel may be required to maintain call quality. This is termed "handover". Handover can either be to a different channel at the same RFP (intracell) or to a different channel at a different RFP (intercell). The handset will only be in active lock when it is in a two way communication with the system. Between calls or specific information transfers with the system the handset will return to idle lock. Each occasion the handset is in active lock the handset has opened a 'link' to the system. For the purposes of this specification the term 'link' will be used to describe a period of active lock. A link may involve the use of more than one channel, ie if the handset hands over to a different channel during active lock, this is still the same link.

On first contacting the system either because the handset has just powered up or the handset has entered the sphere of influence of the system, the handset obtains an idle lock with the system. At this stage the handset may or may not try to make a location registration with the system. A location registration involves the handset communicating its identity to the RFP. Some DECT systems do not allow the handset to make such a location registration request.

On the systems that do allow location registration, the system allocates the handset a Temporary Portable User Identification (TPUI). Before a TPUI can be allocated the handset must identify itself to the system, using a Portable MAC Identity (PMID). Once a TPUI has been assigned to the handset, the PMID used in identifying the handset to the system is derived from a four bit prefix and the 16 least significant bits of the TPUI. This will be unique for each handset registered with the system. Before a TPUI has been assigned, the handset has its own default TPUI and must generate a PMID for use in communication with the system. A PMID derived from a TPUI and a default PMID generated by the handset are distinguishable in that they have a different prefix. To indicate to the system that the PMID is a default PMID generated by the handset the prefix is '1110'.

Under the DECT protocol, the handset cannot change its PMID during a link with the system so once a link has been established the handset relies upon the generated PMID even when a TPUI has been allocated. It will not be until the handset has re-entered idle lock and subsequently selects a traffic channel for active lock that the PMID will be formed from a prefix XXXX that is not 1110' and the 16 least significant bits of the TPUI.

To make a location registration request, that handset first deletes any existing allocated TPUI it has stored. Then it selects a channel for communication and attempts to set up a link. Once this is successfully achieved, the handset provides the system with its IPUI and waits to receive an allocated TPUI. This TPUI is then stored by the handset and used to generate a PMID for subsequent links with the system until the handset powers down and the TPUI is lost. The system records the IPUI and the TPUI and uses the PMID generated from the TPUI for tracking the handset in future communications. On subsequent occassions that the handset makes contact with the system it will be allocated the same TPUI.

A handset monitoring a system scans the available channels for a strong signal. When a strong signal is located this is monitored so that the handset can determine certain system information that is being broadcast. This will include the Radio Fixed Part Identity (RFPI) of the RFP broadcasting the signal. This is broadcast in an Nt message in the A-field of the signal. When the handset wants subsequently to set up a link with the system, a channel with the RFP brodcasting the monitored signal is typically selected. The handset selects a channel by identifying it by its carrier frequency and slot number. Once the handset has selected a channel it is in a position to use this information to derive a default PMID for communication to the RFP.

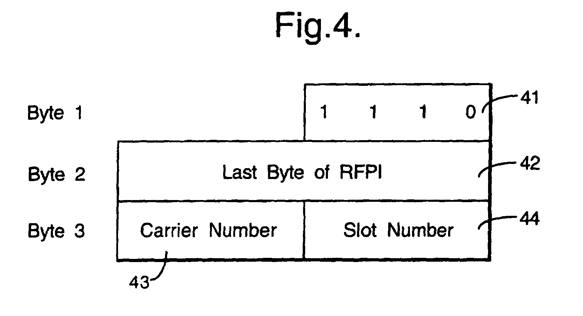

By using the system channel parameters that will by definition be unique to handsets using the system at the same time (the only time the current problem could occur) it can be assured that no two handsets seeking to simultaneously set up a communication channel on a system could generate the same default PMID. Instead, if two handset were to select the same channel neither call would be able to set up. The unique channel parameters could be arranged in any convenient format or used in formulation of a second unique number. Provided that each 16 bit number has a one to one correlation with the unique channel parameters used to generate it and all handsets are using the same formula to generate the default PMID, there can be no duplication. One manner in which the 16 bit string can be formulated from the channel parameters is illustrated in Figure 4.

In Figure 4, the four bit prefix 41 of byte one of the PMID is '1110' as required. The system is thereby able to identify a handset that needs to be provided with a TPUI. The next byte 42 corresponds to the last byte of the RFPI. The RFPIs are again uniquely identified within a system so that they can be individually addressed. The last byte of the RFPI, therefore, uniquely identifies the RFPI with which the handset is communicating. The final byte is formed from the carrier number 43 and slot number 44. The carrier number identifies which of the ten carriers the handset is using and the slot number identifies the time slot of the communication.

In order to gain access to a traffic channel the handset monitors the system 50 to gain sufficient information to select a channel for communication with the system. During this information accumulation the handset will determine the RFPI of a strong RFP 51 and a select a traffic channel 52 on that RFP. This information is collected as a matter of course in order for the handset to make a request for access to the system on a particular channel. Before requesting access to the channel the handset checks to see if it has an allocated TPUI stored from which a PMID can be derived 53. If yes, the PMID is derived from the 16 least significant bits of the allocated TPUI 54. If no, the PMID is generated as described earlier from the RFPI, and the time slot and carrier frequency, of the selected traffic channel 55.

The handset is now in a position to request access to the selected traffic channel 56. The system checks to see if the PMID of the requesting handset is already in use on the system 57. If the PMID is already being used, access is denied to that channel 58 and the handset returns to monitoring the system to fine another suitable traffic channel for selection. If the PMID is not already in use 57, access to the system on the selected channel 59 may be allowed and a communication link is set up.

When the PMID is generated from the RFPI, the carrier frequency and the time slot of a selected traffic channel, the channel on the system which the handset has selected for communication has been uniquely identified. If the handset is successful in setting up communication with the system on that channel no other handset setting up a traffic channel at the same time would be able to use the same PMID as the handset would be denied access to the selected traffic channel. When that link is dropped and a new traffic channel selected for a new link, a new PMID would be generated unless a TPUI is allocated during the first communication. Accordingly, if all handsets using a particular system generate the PMID in this fashion, each handset in contact with the system at any one time will have a different PMID, providing a distinct advantage over the situation with randomly generated defaults PMIDs.

The present invention includes any novel feature or combination of features disclosed herein either explicitly or any generalisation thereof irrespective of whether or not it relates to the claimed invention or mitigates any or all of the problems addressed.

In view of the foregoing description it will be evident to a person skilled in the art that various modifications may be made within the scope of the invention in particular the invention is applicable for use under other protocols other than the DECT protocol including Wireless Customer Premises Equipment (WCPE) and Personal Handyphone System (PHS) and is not restricted to cordless systems.

## Claims

1. A radio handset (5) for communication with a radio telephone system (1,3,2,4) employing transmission on a plurality of communication channels in which a radio handset is identified to the radio telephone system by way of a user identification signal, **characterized in that** the radio handset comprises a processor (9) operable to generate a user identification signal for communication to the system from information uniquely identifying a channel for communication with the system (1,3,2,4).

2. A radio handset according to claim 1 wherein the handset (5) is operable to retain the generated user identification for the duration of a communication link with the system.

3. A radio handset according to claim 1 or 2 wherein the processor (9) is operable to select a channel for opening a communication link with the system and wherein the information uniquely identifying a channel is information uniquely identifying the selected channel.

4. A radio handset according to claim 3 wherein the processor (9) is operable to generate a user identification for each respective communication link with the system.

5. A radio handset according to any preceding claim wherein the radio handset is operable to generate a user identification unless the system has previously allocated a user identification signal.

6. A radio handset according to any preceding claim for a system comprising a plurality of base stations wherein the user identification signal is generated from information indicating the carrier frequency, time slot and communicating base station of the traffic channel.

7. A radio telephone system comprising a plurality of radio handsets for communication with base stations of the system on respective communication channels, each radio handset being identifiable to the system by way of a user identification signal, **characterized in that** each radio handset comprises a processor operable to generate a user identification signal for communication to the system from information uniquely identifying a traffic channel for communication between the handset and the system.

8. A radio telephone system according to claim 7 wherein the system is operable to ignore a handset requesting a traffic channel if the handset communicates the same user identification signal to the system as a handset currently utilising the system.

9. A method for providing a user identification signal for identifying a radio handset for communication with a radio telephone system employing transmission on a plurality of communication channels to the system, **characterized by** generating a user identification signal for communication to the system from information uniquely identifying a channel for communicating with the system.

## Patentansprüche

1. Funktelephonapparat (5) für die Kommunikation mit einem Funktelephonsystem (1, 3, 2, 4), das eine Übertragung auf mehreren Kommunikationskanälen nutzt und in dem ein Funktelephonapparat mittels eines Anwenderidentifizierungssignals für das Funktelephonsystem identifiziert wird, **dadurch gekennzeichnet, dass** der Funktelephonapparat einen Prozessor (9) aufweist, der so betreibbar ist, dass er ein Anwenderidentifizierungssignal für die Kommunikation mit dem System aus Informationen erzeugt, die einen Kanal für die Kommunikation mit dem System (1, 3, 2, 4) eindeutig identifizieren.

2. Funktelephonapparat nach Anspruch 1, wobei der Telephonapparat (5) so betreibbar ist, dass er eine erzeugte Anwenderidentifizierung für die Dauer einer Kommunikationsverbindung mit dem System hält.

3. Funktelephonapparat nach Anspruch 1 oder 2, bei dem der Prozessor (9) so betreibbar ist, dass er einen Kanal zum Öffnen einer Kommunikationsverbindung mit dem System auswählt und bei dem die Informationen, die einen Kanal eindeutig identifizieren, Informationen sind, die den ausgewählten Kanal eindeutig identifizieren.

4. Funktelephonapparat nach Anspruch 3, bei dem der Prozessor (9) so betreibbar ist, dass er eine Anwenderidentifizierung für jede entsprechende Kommunikationsverbindung mit dem System erzeugt.

5. Funktelephonapparat nach einem vorhergehenden Anspruch, wobei der Funktelephonapparat so betreibbar ist, dass er eine Anwenderidentifizierung erzeugt, sofern das System nicht bereits ein Anwenderidentifizierungssignal zugewiesen hat.

6. Funktelephonapparat nach einem vorhergehenden Anspruch für ein System, das mehrere Basisstationen umfasst, wobei das Anwenderidentifizierungssystem aus Informationen, die die Trägerfrequenz, den Zeitschlitz und die kommunizierende Basisstation des Verkehrskanals angeben, erzeugt wird.

7. Funktelephonsystem, das mehrere Funktelephonapparate für die Kommunikation mit Basisstationen des Systems auf entsprechenden Kommunikationskanälen umfasst, wobei jeder Funktelephonapparat für das System mittels eines Anwenderidentifizierungssignals identifizierbar ist, **dadurch gekennzeichnet, dass** jeder Funktelephonapparat einen Prozessor enthält, der so betreibbar ist, dass er ein Anwenderidentifizierungssignal für die Kommunikation mit dem System aus Informationen erzeugt, die einen Verkehrskanal für die Kommunikation zwischen dem Telephonapparat und dem System eindeutig identifizieren.

8. Funktelephonsystem nach Anspruch 7, wobei das System so betreibbar ist, dass es einen Telephonapparat, der einen Verkehrskanal anfordert, ignoriert, falls der Telephonapparat dem System das gleiche Anwenderidentifizierungssignal wie ein momentan das System verwendender Telephonapparat übermittelt.

9. Verfahren zur Erzeugung eines Anwenderidentifizierungssignals zum Identifizieren eines Funktelephonapparats für die Kommunikation mit einem Funktelephonsystem, das eine Übertragung auf mehreren Kommunikationskanälen mit dem System nutzt, **gekennzeichnet durch** das Erzeugen eines Anwenderidentifizierungssignals für die Kommunikation mit dem System aus Informationen, die einen Kanal für die Kommunikation mit dem System eindeutig identifizieren.

## Revendications

1. Un combiné radio-téléphone (5) pour la communication avec un système de radiotéléphone (1, 3, 2, 4) utilisant la transmission sur une pluralité de voies de communication dans lequel un combiné radio-téléphone est identifié auprès du système de radiotéléphone à l'aide d'un signal d'identification d'utilisateur, **caractérisé en ce que** le combiné radio-téléphone comprend un processeur (9) apte à fonctionner pour générer, afin de le communiquer au système, un signal d'identification d'utilisateur à partir d'informations qui identifient de façon unique une voie pour la communication avec le système (1, 3, 2, 4).

2. Un combiné radio-téléphone selon la revendication 1 dans lequel le combiné (5) est apte à fonctionner pour conserver, pendant la durée d'une liaison de communication avec le système, l'identification d'utilisateur qui a été générée.

3. Un combiné radio-téléphone selon la revendication 1 ou 2 dans lequel le processeur (9) est apte à fonctionner pour sélectionner une voie ouvrant une liaison de communication avec le système et dans lequel les informations qui identifient de façon unique une voie sont des informations qui identifient de façon unique la voie sélectionnée.

4. Un combiné radio-téléphone selon la revendication 3 dans lequel le processeur (9) est apte à fonctionner pour générer une identification d'utilisateur pour chaque liaison de communication respective avec le système.

5. Un combiné radio-téléphone selon une revendication précédente quelconque dans lequel le combiné radio-téléphone est apte à fonctionner pour générer une identification d'utilisateur à moins que le système ait attribué préalablement un signal d'identification d'utilisateur.

6. Un combiné radio-téléphone selon une revendication précédente quelconque pour un système comprenant une pluralité de stations de base dans lequel le signal d'identification d'utilisateur est généré à partir d'informations indiquant la fréquence de porteuse, la tranche de temps et la station de base en communication de la voie de trafic.

7. Un système de radiotéléphone comprenant une pluralité de combinés radios-téléphones pour la communication avec des stations de base du système de radiotéléphone sur des voies respectives de communication, chaque combiné radio-téléphone étant identifiable auprès du système à l'aide d'un signal d'identification d'utilisateur, **caractérisé en ce que** chaque combiné radio-téléphone comprend un processeur apte à fonctionner pour générer afin de le communiquer au système un signal d'identification d'utilisateur à partir d'informations qui identifient de façon unique une voie de trafic pour la communication entre le combiné et le système.

8. Un système de radiotéléphone selon la revendication 7 dans lequel le système est apte à fonctionner pour ignorer un combiné qui demande une voie de trafic si le combiné communique au système le même signal d'identification d'utilisateur qu'un combiné utilisant actuellement le système.

9. Un procédé permettant de fourniture un signal d'identification d'utilisateur pour identifier un combiné radio-téléphone en vue de la communication avec un système de radiotéléphone utilisant une transmission sur une pluralité de voies de communication au système, **caractérisé par** l'opération de générer, pour le communiquer au système, un signal d'identification d'utilisateur à partir d'informations qui identifient de façon unique une voie pour communiquer avec le système.
